Europäisches Patentamt

European Patent Office

Office européen des brevets

(11) Numéro de publication: **0 161 157**
**A1**

## (12) DEMANDE DE BREVET EUROPEEN

(21) Numéro de dépôt: 85400670.7

(22) Date de dépôt: 03.04.85

(51) Int. Cl.⁴: **A 47 C 17/16**
B 61 D 31/00, B 60 N 1/10

(30) Priorité: 04.04.84 FR 8405306

(43) Date de publication de la demande:
13.11.85 Bulletin 85/46

(84) Etats contractants désignés:
AT BE CH DE GB IT LI LU NL SE

(71) Demandeur: Wicha, Henri
34 bis avenue de la République
F-93110 Rosny sous Bois(FR)

(72) Inventeur: Wicha, Henri
34 bis avenue de la République
F-93110 Rosny sous Bois(FR)

(74) Mandataire: Bouju, André
38 Avenue de la Grande Armée
F-75017 Paris(FR)

(54) Siège transformable en couchette.

(57) Le siège comporte un châssis (1) sur lequel est montée une assise principale (9) et un dossier comprenant une partie haute (2) et une partie basse (4) articulées l'une à l'autre au moyen d'une articulation (5), l'ensemble étant articulé autour d'une articulation (3) sur le châssis (1).

Le siège comporte en outre une assise additionnelle (12) montée articulée sur le châssis au moyen d'une double articulation (13, 15).

Lorsqu'on veut transformer le siège en couchette, on soulève l'assise principale (9) et on tire le dossier qui se plie suivant l'articulation (5). Il est alors possible d'amener l'ensemble du dossier au-dessus du niveau supérieur du châssis (1), de remettre les parties (2) et (4) en alignement et de rabattre l'ensemble ainsi formé, l'extrémité de la partie (4) prenant alors appui sur le châssis du siège précédent pour constituer une couchette. Par ailleurs, l'assise additionnelle peut pivoter autour des articulations (13) et (15) et venir constituer un plan horizontal à l'arrrière du siège et former une couchette inférieure en association avec l'assise principale (9).

FIG_1

EP 0 161 157 A1

"Siège transformable en couchette"

La présente invention concerne un fauteuil transformable en couchette.

Avec le développement des loisirs et du tourisme, il devient de plus en plus fréquent d'utiliser des véhicules servant à la fois pour le transport des voyageurs depuis un point de rassemblement initial jusqu'aux lieux de leurs loisirs, puis d'utiliser ce même véhicule pour les déplacements sur les lieux de loisirs en particulier pour la visite d'une ville.

Dans le cas de longs trajets, il est souhaitable de transformer les fauteuils, qui sont généralement des fauteuils à deux places, en couchettes afin de permettre aux voyageurs de se reposer pendant le voyage jusqu'à leur destination finale.

Lors des déplacements locaux, il est au contraire souhaitable de disposer d'un véhicule aménagé avec des fauteuils afin de permettre une meilleure visibilité vers l'extérieur.

Les voyages au cours desquels des véhicules de ce genre sont utilisés, étant généralement de courte durée, il est nécessaire que la transformation de fauteuils en couchettes ou vice-versa puisse se faire très rapidement et avec un minimum de déplacement de matériel. De plus, les éléments utilisés pour les diverses positions doivent être si possible communs afin de limiter le volume mort dans le véhicule.

Il est déjà connu de réaliser certains fauteuils transformables en couchettes, par exemple, il est connu de réaliser des fauteuils dont le dossier en une seule pièce est monté de façon articulée à l'extrémité supérieure d'un châssis et peut pivoter entre une position basse inclinée où il fait fonction de dossier et une position haute horizontale où, en collaboration avec le dossier du siège se trouvant immédiatement devant, il assure une position de couchette. Afin de disposer d'une couchette de dimensions suffisantes, il est alors nécessaire de prévoir un dossier en une seule pièce de grande hauteur.   Dans l'utilisation en fonction de fauteuil, un dossier de grande hauteur constitue cependant un inconvénient important car une personne assise sur le fauteuil a la vue gênée par le dossier du fauteuil se trouvant immédiatement devant elle.

Afin de supprimer cet inconvénient, on a imaginé des dossiers de fauteuil en deux parties, chacune des deux parties étant articulée au bord supérieur du châssis et s'étendant normalement parallèlement à celui-ci pour constituer un dossier. Les deux parties peuvent se relever de part et d'autre du châssis vers une position horizontale et être verrouillées dans cette position pour assurer la fonction de couchette supérieure. Dans sa position de fauteuil, un tel dispositif réalise toutefois une surépaisseur importante sur la face arrière du dossier du fauteuil et diminue d'autant l'espace disponible pour la personne assise immédiatement derrière le fauteuil équipé de ce dispositif. De plus, le sommet du dossier en position de fauteuil correspond à la partie médiane de la couchette et doit donc avoir une largeur importante pour que la couchette soit confortable. Les angles du sommet du dossier ne peuvent donc pas être arrondis pour permettre une meilleure visibilité vers l'avant des passagers lorsque ceux-ci sont en position assise.

Par ailleurs, pour la réalisation d'une couchette inférieure, il est connu de prévoir d'une part une assise principale articulée le long de son bord arrière sur le châssis et s'appuyant sur celui-ci le long de son bord avant, et d'autre part une assise additionnelle normalement disposée sous l'assise principale et articulée sur le châssis au moyen d'une double articulation comprenant un premier élément d'articulation relié à l'assise additionnelle et un second élément d'articulation relié au châssis, les deux éléments d'articulation étant reliés entre eux, de sorte que l'assise additionnelle peut basculer et venir dans le prolongement de l'assise principale pour constituer une couchette inférieure. Cependant, dans les dispositifs connus, l'assise principale s'appuie sur une partie du châssis de sorte que si l'assise principale est inclinée en position de siège, elle reste inclinée en position de couchette et les deux éléments de la couchette font entre eux un angle qui diminue le confort de la couchette.

De plus, il est constaté que les sièges doubles transformables en couchette et comportant un dossier inclinable par rapport à l'assise présentent un certain nombre d'inconvénients.

En effet, si le dossier est commun aux deux sièges, l'inclinaison de l'un des dossiers entraîne automatiquement la même inclinaison de l'autre dossier qui lui est solidaire. Ceci ne satisfait pas les utilisateurs qui veulent garder une liberté individuelle quant à l'inclinaison du dossier de leur siège.

Si au contraire on sépare le dossier en deux fractions de dossier individuelles séparément inclinables, il est prévu pour des questions de rigidité, un châssis entourant chaque fraction de dossier le long de ses deux bords latéraux et de son bord supérieur. Dans ce cas, lors de la transformation du dossier en couchette, le montant du châssis qui correspond aux bords adjacents des fractions de dossiers forme une séparation entre les deux couchettes inférieures, ce qui diminue considérablement le confort de ces deux couchettes.

Enfin, dans les sièges connus, le châssis du siège est relié de façon rigide à un pied solidaire du châssis du véhicule de sorte que les chocs imposés au châssis du véhicule, par exemple, en raison d'un mauvais état de la route, sont transmis directement au châssis du siège et donc répercutés sur l'usager.

Le but de la présente invention est de proposer un siège transformable qui assure un confort maximum tant en position de siège qu'en position de couchette, tout en permettant une visibilité maximum dans la position de siège.

Pour cela, on prévoit selon l'invention un siège transformable en couchette comportant un châssis sur lequel est montée une assise principale et un dossier articulé au châssis le long de son bord supérieur, caractérisé en ce que le dossier comporte une partie haute articulée au châssis et une partie basse reliée à la partie haute par une articulation.

Une telle disposition perrmet de réaliser un siège dont le dossier est apparamment de faible hauteur et gêne peu la visibilité mais qui se prolonge vers le bas de façon à assurer une longueur de couchette suffisante, l'articulation entre la partie haute et la partie basse permettant de plier le dossier pour l'amener de la position de siège à la position de couchette.

Selon une version avantageuse de l'invention, l'articulation entre les deux parties de dossier est auto-blocante dans une direction d'appui sur le dossier. Une telle disposition permet une mise en place rapide dans la position de couchette sans qu'il soit nécessaire de prévoir une pièce de blocage dans la position de couchette.

Selon d'autres caractéristique de l'invention, un accoudoir escamotable est monté le long d'un bord du dossier et joue ainsi le rôle d'un garde-fou escamotable pour la position de couchette, le châssis comporte des butées pour le dossier dans sa position de fauteuil, ces butées étant disposées pour servir également de support à une assise additionnelle formant une partie d'une couchette inférieure.

Selon encore une autre caractéristique de l'invention, le siège comporte une assise principale articulée sur le châssis et reposant sur une surface de butée et une assise additionnelle articulée sur le châssis au moyen d'une double articulation comprenant un premier élément d'articulation relié à l'assise additionnelle et un second élément d'articulation relié au châssis, les deux éléments d'articulation étant reliés entre eux, le premier élément d'articulation étant porté par une plaque s'étendant au-delà du bord de l'assise additionnelle et la distance entre les deux éléments d'articulation étant supérieure à la distance entre le second élément d'articulation et la surface de butée de l'assise principale. Cette disposition permet en particulier d'obtenir que dans la position de siège, l'assise principale soit inclinée vers l'arrière afin de rendre le siège plus confortable, tandis que dans la position de couchette le bord de l'assise principale repose sur la plaque s'étendant au-delà du bord de l'assise additionnelle, et l'assise principale se trouve alors horizontale et constitue avec l'assise additionnelle une couchette confortable.

Selon encore une caractéristique de l'invention, le châssis du siège est monté sur un pied par l'intermédiaire d'un caisson en tôle pliée. Un tel caisson joue le rôle d'amortisseur entre le châssis du véhicule et le châssis du siège, de sorte que le confort du siège et des couchettes se trouve amélioré.

Selon un autre aspect de l'invention plus particulièrement adapté aux sièges doubles, la partie haute de dossier est divisée en deux fractions séparées raccordées à la partie basse commune, et le châssis comprend une partie de châssis supportant l'assise principale et une partie de châssis supportant le dossier, articulées entre elles autour d'un axe qui coïncide avec l'axe d'articulation des fractions de la partie haute avec la partie basse de dossier, lorsque le dossier est en position de siège.

Ainsi, l'alignement des articulations entre les parties de châssis avec l'articulation entre les fractions de la partie haute et la partie basse de dossier en combinaison avec la séparation des fractions de la partie haute de dossier permet d'incliner individuellement les fractions de la partie haute de dossier, tandis que la partie basse commune assure une rigidité suffisante de l'ensemble du dossier en particulier lorsque celui-ci est mis en position de couchette.

Selon une version avantageuse de cet aspect de l'invention, le siège comporte des moyens de liaison escamotables des fractions de la partie haute de dossier. Ainsi, en position de siège, les moyens de liaison sont escamotés et les fractions de la partie haute peuvent être inclinées séparément, tandis que dans la position de couchette, les fractions de la partie haute de dossier sont reliées entre elles, cette liaison assurant une rigidité supplémentaire de la couchette.

D'autres caractéristiques et avantages de l'inven-l'invention résulteront encore de la description ci-après d'exemples non limitatifs en référence aux dessins annexés dans lesquels :

- la figure 1 est une vue de côté d'un premier mode de réalisation de siège transformable selon l'invention dans sa position de siège ;

- la figure 2 est une vue partielle de dos du siège de la figure 1 dans sa position de siège, la partie basse du dossier étant démontée ;

- la figure 3 est une vue de côté du siège de la figure 1 dans une position intermédiaire entre la position de siège et la position de couchette ;

- la figure 4 est une vue de côté du siège de la figure 1 dans la position de couchette ;

- la figure 5 est une vue de côté d'un second mode de réalisation de l'invention ;

- la figure 6 est une vue de dos du siège de la figure 5 ;

- la figure 7 est une vue de dos partielle en position de couchette du siège de la figure 5 ;

- la figure 8 est une vue en coupe partielle agrandie de l'articulation supérieure du dossier ;

- la figure 9 est une vue en coupe partielle agrandie suivant le plan III-III de la figure 5 du moyen de liaison entre les fractions de la partie haute de dossier.

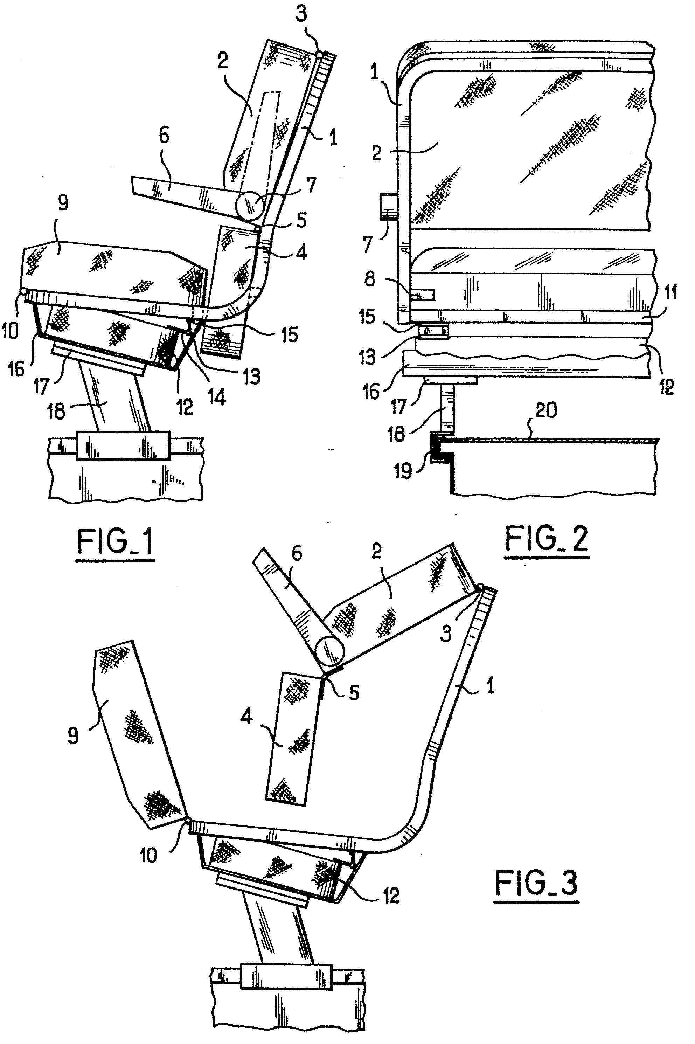

En se reportant à la figure 1, le siège comporte un châssis tubulaire 1 en forme de L en vue de côté et en forme de U inversé en vue de dos. Sur la partie sensiblement verticale du châssis est monté un dossier comprenant une partie haute de dossier 2 articulée à sa partie supérieure  sur la partie supérieure du châssis par une articulation 3, et une partie basse de dossier 4 reliée  à la partie haute de dossier par une articulation 5. La partie haute de dossier 2 porte également un accoudoir 6 monté au moyen d'une articulation 7 sur le côté du dossier et mobile entre une position sensiblement horizontale représentée en traits pleins et une position escamotée représentée en pointillés sur la figure 1.

En position de siège,  la partie basse 4 du dossier est maintenue par des butées 8 fixées sur le châssis et s'étendant vers l'intérieur du cadre formé par celui-ci. Par ailleurs, l'articulation 5 est auto-blocante pour un mouvement tendant à ramener la partie basse 4 du dossier vers l'avant par rapport à la partie haute 2 du dossier, au-delà de la position correspondant à l'alignement entre la partie haute 2 et la partie basse 4 tandis que cette articulation est libre de se refermer pour un mouvement de la partie basse 4 vers l'arrière par rapport à la partie haute 2 du dossier. Ainsi,  lorsqu'un usager s'appuie sur le dossier alors que celui-ci est en position de siège, la partie basse 4 du dossier s'appuie sur la butée 8 et les parties haute et basse du dossier se mettent à l'alignement l'une de l'autre.

Le siège comprend également une assise principale 9 articulée à son extrémité avant sur l'extrémité avant du châssis 1 au moyen d'une articulation 10, tandis que la partie arrière de l'assise principale 9 repose sur une surface de butée constituée par la face supérieure d'une traverse 11 s'étendant entre les deux branches latérales du châssis.

Une assise additionnelle 12 est montée sous l'assise principale 9 au moyen d'une double articulation comprenant un premier élément d'articulation 13 relié à l'assise additionnelle par une plaque 14 fixée sur le côté de l'assise additionnelle 12 et s'étendant au-delà du bord de l'assise addtionnelle 12 de sorte que le premier élément d'articulation 13 est espacé du bord de l'assise additionnelle 12. La double articulation comprend un second élément d'articulation 15 fixé en bas de la face avant de la traverse 11.

Le châssis est supporté par un caisson 16 en forme de U réalisé, par exemple, à partir d'une tôle pliée et fixée à la partie inférieure du châssis. Le caisson 16 est lui-même fixé sur une platine 17 portée par un pied 18 se terminant à sa partie inférieure par un profilé 19 fixé sur le rebord d'une plate-forme 20 solidaire du châssis du véhicule.

Lorsque l'on veut transformer le siège en couchettes on soulève l'assise principale 9 qui pivote autour de son articulation 10. On tire ensuite le dossier par sa partie médiane et la partie haute 2 du dossier pivote par rapport au châssis autour de l'articulation 3 tandis que la partie basse 4 du dossier pivote par rapport à la partie haute autour de l'articulation 5 et pend comme cela est représenté sur la figure 3.

L'ensemble du dossier pivote jusqu'à une position au-dessus du montant supérieur du châssis 1, et on relâche alors la partie haute 2 du dossier, tout en maintenant la partie basse 4. Les parties haute et basse du dossier se mettent alors en alignement et constitue un ensemble rectiligne d'une longueur légèrement supérieure à l'espace qui existe entre les châssis de deux sièges adjacents. L'extrémité basse du dossier qui devient l'extrémité avant de la couchette peut alors s'appuyer sur le haut du châssis du fauteuil immédiatement précédent. Etant donné que l'articulation 5 est auto-bloquante, dans le sens d'un appui sur le dossier, la couchette reste dans une position horizontale lorsqu'une personne s'installe dessus.

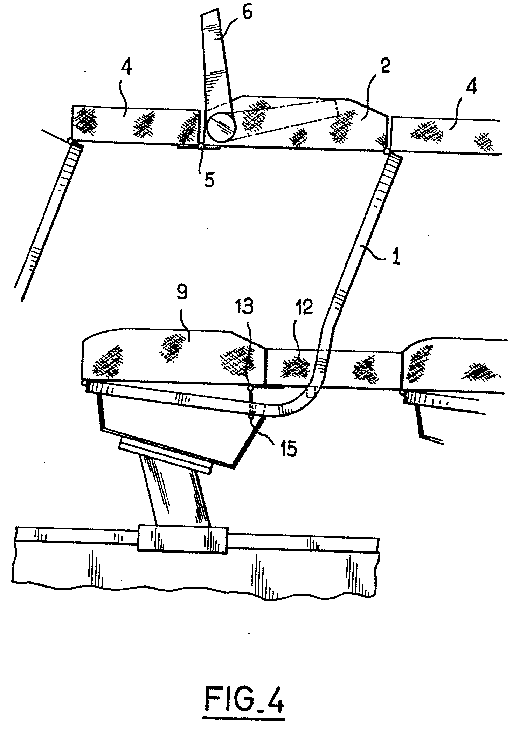

L'accoudoir 6 sert alors de garde-fou ainsi qu'on peut le voir sur la figure 4 et peut être rabattu pour permettre un accès à la couchette.

On remarquera que lorsque plusieurs dossiers sont mis en position de couchettes, l'extrémité avant d'une partie 4 de dossier est en contact avec l'extrémité arrière d'une partie 2 et pour replier l'articulation 5 en vue de transformer à nouveau la couchette en dossier, il est nécessaire d'incliner les parties 2 et 4. Lors de cet inclinaison, les surfaces extrêmes de ces parties s'appliquent contre les surfaces extrêmes des couchettes adjacentes et les compriment. Cette compression ne peut être faite que moyennant un effort et constitue donc une sécurité contre un repliement intempestif des parties de dossier 2 et 4.

Lorsque l'assise principale 9 est soulevée, on a également accès à l'assise additionnelle 12, et il est possible de soulever celle-ci. L'assise additionnelle pivote alors autour de l'élément d'articulation 15 et après basculement à travers le cadre 1 vient s'appuyer sur la surface supérieure des butées 8. En raison de l'élément d'articulation 13, il est alors possible de repousser l'assise additionnelle vers l'arrière jusqu'à ce que son extrémité libre vienne en butée contre le bord avant de l'assise principale du siège situé immédiatement derrière, selon la position qui est représentée sur la figure 4.

L'assise principale 9 peut alors être rabattue et vient cette fois en butée sur la partie de plaque 14 s'étendant sur le bord avant du coussin additionnel 12 et l'élément d'articulation 13, de sorte que la couchette inférieure constitue alors également un ensemble horizontal. On notera
à ce propos, que la distance entre les éléments d'articulation 13 et 15 est supérieure à la distance entre le second
élément d'articulation 15 et la surface supérieure de la
traverse 11 formant surface  de butée pour l'assise principale
dans la position de siège. Ainsi, en prévoyant une inclinaison vers l'arrière de la branche inférieure du châssis
1, il est possible d'obtenir une assise principale inclinée
vers l'arrière dans la position de siège, ce qui est la
position de siège la plus confortable, et une position
horizontale lors de la transformation en couchettes, ce qui
est également la position la plus confortable pour le repos.

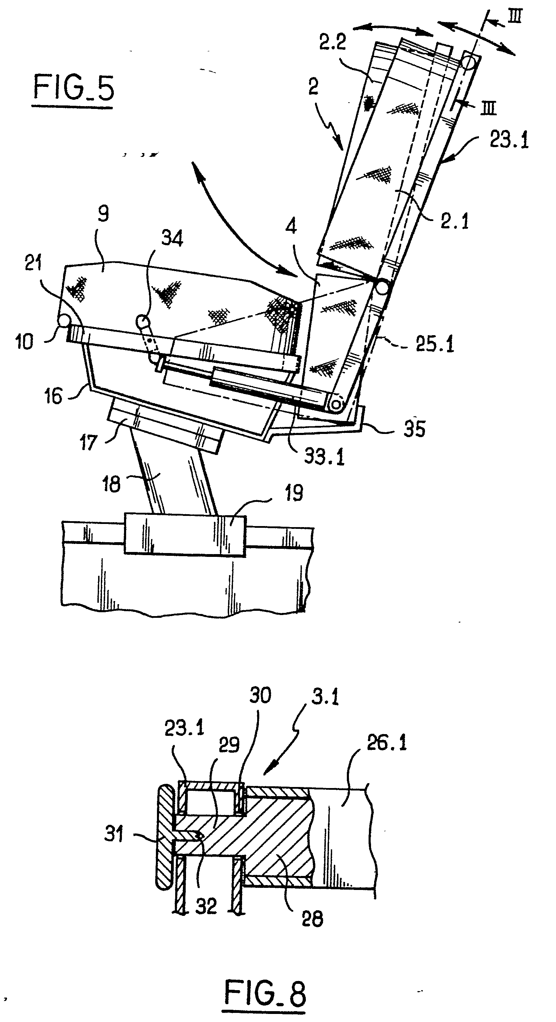

Les figures 5 à 9 illustrent un deuxième mode
de réalisation de l'invention.

Comme dans le cas du premier mode de réalisation, le siège
comporte un châssis sur lequel est monté un dossier
comprenant une partie haute 2 de dossier articulée à
sa partie supérieure sur la partie supérieure du châssis
par une articulation 3.1, 3.2 et une partie basse de
dossier 4 reliée à la partie haute 2 de dossier et par
une articulation 5 comprenant une série de charnières.

Le siège comprend également une assise principale
9 articulée à son extrémité avant sur l'extrémité avant
du châssis autour d'une articulation 10.

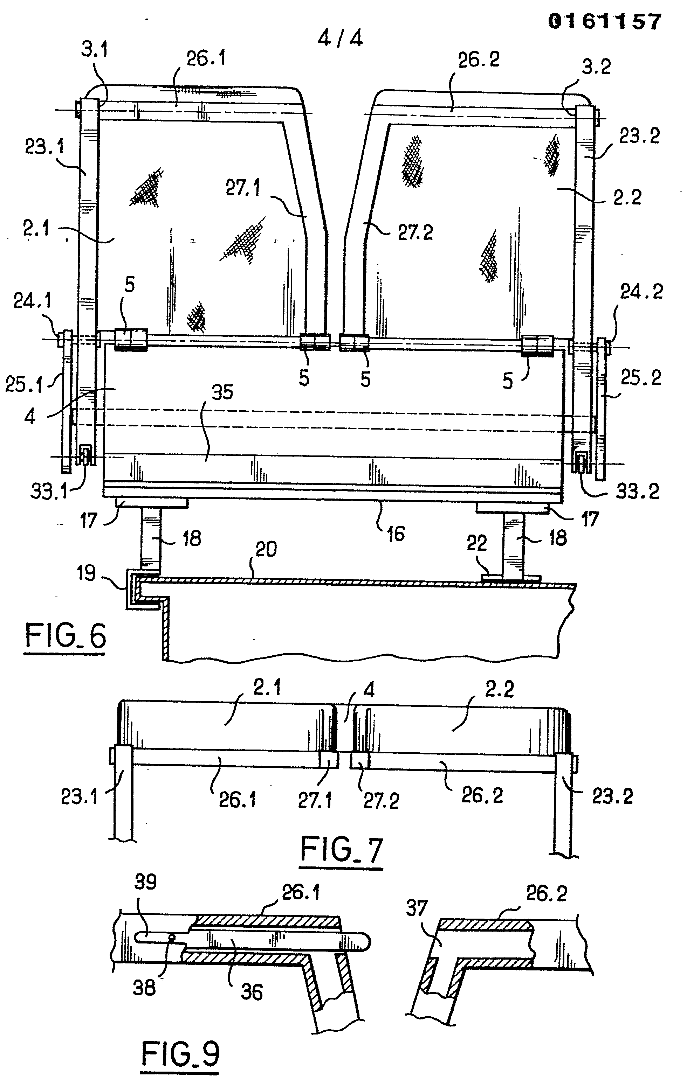

Selon ce second mode de réalisation, le châssis du siège comporte
une partie de châssis 21 supportant l'assise principale
9. La partie de châssis 21 est elle-même supportée par
un caisson 16 en forme de U fixé sur des platines 17
porté par des pieds 18, l'un des pieds se terminant
à sa partie inférieure par un profilé 19 fixé sur le
rebord d'une plate-forme 20 solidaire du châssis du
véhicule (figure 6), tandis que l'autre pied 18 se termine à sa partie inférieure par une platine 22 également fixée sur la plate-forme 20.

Le châssis comporte également une partie de châssis supportant le dossier et comprenant des poutres 23.1 et 23.2 disposées de part et d'autre du siège et montées sur des pivots 24.1 et 24.2 respectivement portés par des goussets 25.1 et 25.2 fixés sur les côtés du châssis 21 supportant l'assise principale 9 (on notera à ce propos que, sur la figure 5, le gousset 25.1 est supposé retiré pour permettre une meilleure représentation des autres éléments du siège et est simplement symbolisé par un trait mixte).

La partie de châssis 21 supportant l'assise principale 9 et la partie de châssis 23.1, 23.2 supportant le dossier 2 sont ainsi articulées entre elles autour des pivots 24.1 et 24.2.

Le dossier comporte une partie haute 2 de dossier divisée en deux fractions 2.1 et 2.2 séparées et une partie basse 4 commune reliée aux fractions 2.1 et 2.2 de la partie haute 2 par des charnières formant l'articulation 5.

Les pivots 24.1 et 24.2 sont disposés pour que leur axe coïncide avec l'axe d'articulation des fractions 2.1 et 2.2 de la partie haute 2 avec la partie basse 4 de dossier, lorsque le dossier est en position de siège.

Chaque fraction 2.1 et 2.2 de la partie haute 2 de dossier est supportée par la poutre 23.1, 23.2 correspondante par l'intermédiaire d'un châssis en L comportant un élément horizontal 26.1, 26.2 et un élément sensiblement vertical 27.1, 27.2. Les éléments 27.1, 27.2 sont raccordés à la partie basse par une articulation 5. L'extrémité de chaque élément horizontal 26.1, 26.2 forme avec la poutre correspondante 23.1, 23.2 une articulation 3.1, 3.2 comprenant (figure 8) un embout 28 emmanché dans l'élément 26.1, 26.2 correspondant et se terminant par un pivot 29 engagé dans un alésage 30, de la poutre 23.1, 23.2 correspondante et maintenu dans cette position par une vis à tête large 31 vissée dans un trou taraudé 32 du pivot 29.

La position de chaque poutre 23.1, 23.2 est commandée par un vérin à gaz 33.1, 33.2 dont une extrémité est articulée sur la poutre 23.1, 23.2 et l'autre extrémité est reliée d'une façon connue en soi à une manette 34 articulée sur la partie de châssis 21 supportant l'assise principale 9. Dans le cas représenté, et afin d'obtenir un siège aussi compact que possible, les vérins à gaz 33.1, 33.2 sont disposés à l'aplomb du tube formant les bords latéraux de la partie de châssis 21. Chaque manette 34 s'étend à travers le tube formant le bord latéral de la partie de châssis 21 et est articulée sur celui-ci.

Dans la position de siège, la partie basse 4 de dossier est supportée par une tôle en Z 35 fixée sur la paroi arrière du caisson 16.

Selon la version préférée représentée, le siège comporte des moyens de liaison escamotables, des fractions 2.1, 2.2 de la partie haute de dossier. Pour cela, selon une réalisation particulière illustrée par la figure 9, l'élément de châssis 26.1, 26.2 supportant chaque dossier est tubulaire et les moyens de liaison des fractions 2.1, 2.2 de la partie haute de dossier comprennent un pène 36 coulissant dans l'un des éléments 26.1 de châssis supportant le dossier et disposé pour s'engager dans l'élément de châssis 26.2 supportant le dossier immédiatement adjacent et comportant une ouverture 37 venant en regard du pène 36 lorsque les fractions 2.1 et 2.2 de la partie haute 2 de dossier ont une même inclinaison. Le mouvement du pène 36 est commandé par un ergot 38 s'étendant à travers une fente 39 prévue dans la paroi arrière de l'élément 26.1.

Les fractions 2.1, 2.2 de la partie haute 2 de dossier recouvrent la partie de châssis 23.1, 23.2 les supportant et s'appuient sur celle-ci lorsque le dossier est en position de siège.

Le fonctionnement du siège est alors le suivant : lorsque l'assise et le dossier sont en position de siège, l'assise s'appuie sur la partie de châssis 21, chacune des fractions 2.1, 2.2 de la partie haute 2 de dossier s'appuie le long de son bord sur la poutre correspondante 23.1, 23.2 et la partie basse 4 de dossier est supportée par la tôle 35. Lorsque l'un des utilisateurs désire incliner son dossier, il manoeuvre la manette 34 correspondant à sa poutre support 23.1 ou 23.2 qui pivote autour du pivot correspondant 24.1, 24.2 en entraînant la fraction 2.1 ou 2.2 qui lui est associée. En raison de la coincidence entre l'axe des pivots 24.1, 24.2 et l'axe des articulations 5, un mouvement d'une fraction 2.1, 2.2 de la partie haute 2 de dossier ne provoque aucun mouvement de la partie basse 4, de sorte que chacune des fractions 2.1, 2.2 peut être manoeuvrée individuellement sans aucune gêne ni aucune contrainte mécanique particulière sur l'une des pièces du siège, la partie basse 4 de siège assurant simplement une meilleure rigidité de l'ensemble du dossier.

Lorsque l'on souhaite passer à une position de couchette, les deux fractions 2.1, 2.2 de dossier sont redressées dans leur position la plus proche de la verticale. Le cas échéant, les fractions 2.1, 2.2 sont reliées entre elles par les moyens de liaison 36 puis l'ensemble de partie haute 2 et de la partie basse 4 de dossier est soulevé et ramené en position horizontale où il peut s'appuyer sur le siège précédent comme indiqué dans le brevet principal. Dans cette position, l'espace situé sous la couchette supérieure est entièrement disponible ainsi que cela est illustré sur la figure 7.

14

Bien entendu, l'invention n'est pas limitée au mode de réalisation décrit ci-dessus et on peut y apporter des variantes d'exécution.

Ainsi, le châssis en L comprenant les éléments horizontaux 26.1, 26.2 et verticaux 27.1, 27.2 peut être remplacé par des éléments rigidifiant séparés, fixés dans l'épaisseur du dossier, par exemple sur une planche formant l'arrière du dossier.

De même , les poutres rectilignes 23.1, 23.2 peuvent être remplacées par des poutres en L dont une branche est disposée obliquement comme sur le mode de réalisation représenté, tandis que l'autre branche s'étend horizontalement le long du bord supérieur de chaque partie haute 2.1, 2.2 de dossier, chaque partie haute étant alors articulée sur la branche horizontale de la poutre au moyen de charnières.

Les vérins à gaz 33.1, 33.2 peuvent être remplacés par tout moyen de réglage habituel de l'inclinaison d'un siège, par exemple un élément à crémaillère.

REVENDICATIONS                    **0161157**

1. Siège transformable en couchette comportant un châssis (1) sur lequel est montée une assise principale (9) et un dossier articulé au châssis le long de son bord supérieur, caractérisé en ce que le dossier comporte une partie haute (2) articulée au châssis (1) et une partie basse (4) reliée à la partie haute (2) par une articulation (3).

2. Siège selon la revendication 1, caractérisé en ce que l'articulation (5) entre les deux parties de dossier est autoblocante dans une direction d'appui sur le dossier.

3. Siège selon la revendication 1 ou la revendication 2, caractérisé en ce qu'au moins un accoudoir (6) escamotable est monté le long d'un bord du dossier.

4. Siège selon l'une quelconque des revendications 1 à 3 caractérisé en ce que le châssis comporte des butées (8) pour le dossier dans sa position de fauteuil, ces butées (8) étant disposées pour servir également de support à une assise additionnelle (12) formant une partie d'une couchette inférieure.

5. Siège selon la revendication 1 comportant une assise principale (9) articulée sur le châssis (1) et reposant sur une surface de butée et une assise additionnelle (12) articulée sur le châssis au moyen d'une double articulation comprenant un premier élément d'articulation (13) relié à l'assise additionnelle (12) et un second élément d'articulation (15) relié au châssis (1), les deux éléments d'articulation étant reliés entre eux, caractérisé en ce que le premier élément d'articulation (13) est porté par une plaque s'étendant au-delà du bord de l'assise additionnelle (12) et en ce que la distance entre les deux éléments d'articulation est supérieure à la distance entre le second élément d'articulation et la surface de butée de l'assise principale.

6. Siège selon l'une quelconque des revendications 1 à 5, caractérisé en ce que le châssis est monté sur un pied par l'intermédiaire d'un caisson (16) en tôle pliée.

16

7. Siège transformable en couchette selon l'une des revendications 1 à 6 comportant deux places adjacentes, caractérisé en ce que la partie haute (2) de dossier est elle-même divisée en deux fractions (2.1, 2.2) séparées raccordées à la partie basse (4) commune, et en ce que le châssis comprend une partie de châssis (21) supportant l'assise principale (9) et une partie de châssis (23.1, 23.2) supportant le dossier, articulées entre elles autour d'un axe qui coïncide avec l'axe d'articulation des fractions (2.1, 2.2) de la partie haute (2) avec la partie basse (4) de dossier, lorsque le dossier est en position de siège.

8. Siège transformable conforme à la revendication 7, caractérisé en ce que chaque fraction (2.1, 2.2) de la partie haute (2) de dossier est raccordée à un moyen individuel de commande (23.1, 23.2 ; 33.1, 33.2 ; 34) de l'angle d'inclinaison de cette fraction.

9. Siège transformable conforme à la revendication 8, caractérisé en ce que le moyen individuel de commande comprend une poutre (23.1, 23.2) articulée sur un gousset (25.1, 25.2) fixé à la partie (21) du châssis supportant l'assise principale (9), la position de la poutre (23.1, 23.2) étant commandée par un vérin (33.1, 33.2) dont une extrémité est articulée sur la poutre (23.1, 23.2) et l'autre extrémité est reliée à une manette (34) articulée sur la partie (21) de châssis supportant l'assise principale (9).

10. Siège transformable conforme à l'une des revendications 7 à 9 caractérisé en ce qu'il comporte des moyens de liaison (36) escamotables des fractions (2.1, 2.2) de la partie haute (2) de dossier.

11 . Siège transformable conforme à la revendication 10, caractérisé en ce que les éléments de châssis (26.1, 26.2) supportant les fractions (2.1, 2.2) de la partie haute (2) de dossier sont tubulaires et en ce que les moyens de liaison des fractions de la partie haute (2) de dossier comprennent un pène (36) coulissant dans un élément (26.1) de châssis supportant une fraction (2.1) de la partie haute (2) de dossier et disposé pour s'engager dans un élément (26.2) de châssis supportant l'autre fraction (2.2) de la partie haute (2) de dossier immédiatement adjacente.

12. Siège transformable conforme à l'une des revendications 7 à 11, caractérisé en ce que les fractions (2.1, 2.2) de la partie haute (2) de dossier recouvrent la partie de châssis (23.1, 23.2) les supportant et s'appuient sur celle-ci lorsque le dossier est en position de siège. _

0161157

FIG_1

FIG_2

FIG_3

0161157

FIG.4

0161157

FIG.5

FIG.8

FIG_6

FIG_7

FIG_9

**Office européen
des brevets**

**RAPPORT DE RECHERCHE EUROPEENNE**

**0161157**
Numero de la demande

EP  85 40 0670

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 051 564  (GUDISH)<br>* Colonne 3, ligne 33 - colonne 4, ligne 13; figures * | 1 | A 47 C   17/16<br>B 61 D   31/00<br>B 60 N    1/10 |
| A | | 2 | |
| | --- | | |
| A | NL-A-6 512 871  (NICKEL)<br>* Page 4, ligne 3 - page 5, ligne 11; figures * | 1,3,6 | |
| | --- | | |
| A | DE-C-  881 251  (OECKL)<br>* En entier * | 1,3 | |
| | --- | | |
| A | FR-A-2 033 746  (RITTIRSCH) | | |
| | --- | | |
| A | FR-A-  924 927  (BUDD) | | |
| | ----- | | |

| DOMAINES TECHNIQUES RECHERCHES (Int. Cl.4) |
|---|
| A 47 C<br>B 61 D<br>B 62 D<br>B 60 N |

Le présent rapport de recherche a été établi pour toutes les revendications

| Lieu de la recherche | Date d'achèvement de la recherche | Examinateur |
|---|---|---|
| LA HAYE | 12-07-1985 | VANDEVONDELE J.P.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503. 03.82